# EUROPEAN PATENT APPLICATION

(11) **EP 4 413 857 A1**
(43) Date of publication of application: **14.08.2024**
(21) Application number: 22717336.6
(22) Date of filing: 24.02.2022
(51) Int. Cl.: A01N 1/00

(54) **LIQUID-BASED CELL PRESERVATION SOLUTION AND PREPARATION METHOD THEREFOR**

(30) Priority: 08.10.2021 CN 202111172785
(71) Applicant: Daan Gene Co., Ltd., Guangzhou, Guangdong 510665 (CN)
(72) Inventor: JIANG, Xiwen, Guangzhou, Guangdong 510665 (CN); QI, Wenchuang, Guangzhou, Guangdong 510665 (CN); WU, Runfeng, Guangzhou, Guangdong 510665 (CN); JIAN, Junxing, Guangzhou, Guangdong 510665 (CN); DIAO, Xue, Guangzhou, Guangdong 510665 (CN); LEI, Suwei, Guangzhou, Guangdong 510665 (CN)
(74) Representative: Handsome I.P. Ltd
(86) International application number: PCT/CN2022/077616
(87) International publication number: WO 2023/056726

(57) **Abstract**

The present disclosure provides a liquid-based cell preservation solution and a method for preparing the same. The preservation solution includes, by mass percentage: 15 to 20% of an alcohol, 0.4 to 0.7% of a buffer component, 0.2 to 0.5% of an ionic strength modifying agent, 0.05 to 2% of an anticoagulant, 0.05 to 0.2% of a mucus dissociating agent, 0.5 to 0.9% of a preservative, and purified water as the balance. The components of cell preservation solution are set reasonably, and the cells may be preserved at normal temperature for a long time to maintain the cell morphology. Addition of the mucus dissociating agent may effectively soften cell mucus, and separates cells adhered by mucus in the sample, thereby preventing cell accumulation. Addition of the preservative may effectively inhibit the proliferation of mold, bacteria or other pathogens and facilitate cell preservation.

## Description

This application is based upon and claims priority to Chinese Patent Application No. 202111172785.7, filed before China National Intellectual Property Administration on October 8, 2021 and entitled "LIQUID-BASED CELL PRESERVATION SOLUTION AND METHOD FOR PREPARING SAME," the entire contents of which are incorporated herein by reference.

### TECHNICAL FIELD

The present disclosure relates to the field of biotechnology, and in particular, relates to a liquid-based cell preservation solution and a method for preparing the same.

### BACKGROUND

Currently, cervical cancer is currently one of the most common malignant tumors in female cancers. Early diagnosis of cervical cancer and precancerous lesions is the key to improving the cure rate and survival of patients with cervical cancer, and cervical cancer screening methods include HPV genotyping and thin-layer liquid-based cytology. HPV genotyping test is expensive, imposes high rigid requirements on environment and equipment, and is not suitable for routine large-scale screening methods. Thin-layer liquid-based cytology is the most widely used screening method for cervical cancer because of its low cost, low requirements on examination environment and equipment. It is a subject to diagnose clinical conditions by observing changes in cell structure and morphology. For decades, cytology has become the main method for large-scale screening of cervical cancer and follow-up observation of high-risk population, such that the incidence of advanced cervical cancer is greatly reduced.

Thin-layer liquid-based cytology, however, also has deficiencies. Because once cells depart from the original living environment, the morphological structure of cells may be changed. The current diagnosis may be ensured only by correct cell preservation methods. The conventional cell preservation solutions usually contain more than 40% alcohols, or cryopreserve the cell samples. However, these cells have a short storage time and damages may be caused to the cells, resulting in changes in cell morphology and structure, thus affecting the judgment of lesions.

The present disclosure is intended to provide a method for preparing a liquid-based cell preservation solution, which is suitable for thin-layer liquid-based cytological examination.

### SUMMARY

Based on the above-mentioned problems, an object of the present disclosure is to provide a liquid-based cell preservation solution and a method for preparing the same, so as to overcome the defect of a short cell preservation time in the cell solution in the related art and at the same time well maintain cell morphology.

One technical solution of the present disclosure is to provide a liquid-based cell preservation solution.

The liquid-based cell preservation solution includes, by mass percentage: 15 to 20% of an alcohol, 0.4 to 0.7% of a buffer component, 0.2to 0.5% of an ionic strength modifying agent, 0.05 to 2% of an anticoagulant, 0.05 to 0.2% of a mucus dissociating agent, 0.5 to 0.9% of a preservative, and purified water as the balance.

Another technical solution of the present disclosure is to provide method for preparing a liquid-based cell preservation solution.

The method for preparing the liquid-based cell preservation solution includes:
adding a buffer component, an ionic strength modifying agent, an anticoagulant, a mucus dissociating agent, and a preservative to a volumetric flask to obtain a mixed solution;
adding purified water into the volumetric flask, and stirring to dissolve the mixed solution; then adding an alcohol, continuing to stir and mix well to prepare a precursor liquid; and
adjusting a pH of the precursor liquid to 6.50 to 7.00, and supplementing purified water to prepare the liquid-based cell preservation solution.

Compared with the related art, the present disclosure achieves the following beneficial effects:
(1) The components of cell preservation solution are set reasonably, and the cells may be preserved at normal temperature for a long time to maintain the cell morphology.
(2) Addition of the mucus dissociating agent may effectively soften cell mucus, and separates cells adhered by mucus in the sample, thereby preventing cell accumulation.
(3) Addition of the preservative may effectively inhibit the proliferation of mold, bacteria or other pathogens and facilitate cell preservation.

### BRIEF DESCRIPTION OF THE DRAWINGS

FIG. 1 is a view showing morphology of cells of Example 1 before preservation; and
FIG. 2 is a view showing morphology of cells stored for 1 year using the preservation solution prepared in Example 1.

### DETAILED DESCRIPTION

Some exemplary embodiments of the present disclosure are described in detail hereinafter with reference to the accompanying drawings.

A liquid-based cell preservation solution according to the present disclosure is composed of purified water, an alcohol, a buffer component, an ionic strength modifying agent, an anticoagulant, a mucus dissociating agent, a preservative, and the like. In terms of mass percentages, the liquid-based cell preservation solution includes:
15 to 20% of the alcohol, 0.4 to 0.7% of the buffer component, 0.2 to 0.5% of the ionic strength modifying agent, 0.05 to 2% of the anticoagulant, 0.05 to 0.2% of the mucus dissociating agent, 0.5 to 0.9% of the preservative, and the purified water as the balance.

Preferably, in the liquid-based cell preservation solution, the alcohol component may be one or any two selected from methanol, ethanol, and isopropanol; for example, the alcohol component is selected from methanol, ethanol, or isopropanol; or the alcoholic component is selected from a mixed alcohol of methanol and ethanol, a mixed alcohol of ethanol and isopropanol, and a mixed alcohol of methanol and isopropanol, wherein a mass ratio of methanol to ethanol is from 10:1 to 1:1, a mass ratio of ethanol to the isopropanol is from 5:1 to 1:1, and a mass ratio of the methanol to isopropanol is from 10:1 to 2:1. In liquid-based cell preservation solution, the alcoholic component is preferably methanol. In the case that the alcohol content is controlled below 20%, it is conducive to avoiding changes of cell morphology and structure.

Preferably, the buffer component in the liquid-based cell preservation solution may be any one of sodium dihydrogen phosphate, potassium dihydrogen phosphate, sodium phosphate, or potassium phosphate.

Preferably, in the liquid-based cell preservation solution, the ionic strength modifying agent component may be one or any two selected from sodium acetate, magnesium acetate, calcium acetate, sodium chloride and potassium chloride; for example, the ionic strength modifying component is individually selected from sodium acetate, magnesium acetate, calcium acetate, sodium chloride or potassium chloride; or the ionic strength modifying component is one selected from a mixture of sodium acetate and magnesium acetate, a mixture of magnesium acetate and calcium acetate, a mixture of calcium acetate and sodium chloride, a mixture of sodium chloride and potassium chloride, a mixture of sodium acetate and calcium acetate, a mixture of sodium acetate and sodium chloride, a mixture of sodium acetate and potassium chloride, a mixture of magnesium acetate and sodium chloride, a mixture of magnesium acetate and potassium chloride, a mixture of calcium acetate and potassium chloride; when an ionic strength modifier is a mixture, and a molar ratio of the respective components is from 5:1 to 1:5.

Preferably, in the liquid-based cell preservation solution, the anticoagulant is one or any two selected from ethylenediamine tetraacetic acid, disodium ethylenediamine tetraacetic acid, and dipotassium ethylenediamine tetraacetic acid; for example, the anticoagulant is individually selected from ethylenediamine tetraacetic acid, disodium ethylenediamine tetraacetic acid, or dipotassium ethylenediamine tetraacetic acid; or the anticoagulant is one selected from a mixture of ethylenediamine tetraacetic acid and disodium ethylenediamine tetraacetic acid, a mixture of disodium ethylenediamine tetraacetic acid and dipotassium ethylenediamine tetraacetic acid, and a mixture of ethylenediamine tetraacetic acid and dipotassium ethylenediamine tetraacetic acid; and when the anticoagulant is a mixture, a molar ratio of the respective components is from 3:1 to 1:1.

Preferably, in the liquid-based cell preservation solution, the mucus dissociating agent is selected from one or any two of the group consisting of N-acetyl-L-cysteine, dithiothreitol and tris(2-carbonylethyl)phosphine hydrochloride; for example, the mucus dissociating agent is individually selected from N-acetyl-L-cysteine, dithiothreitol, or tris(2-carbonylethyl)phosphine hydrochloride; or the mucus dissociating agent is selected from a mixture of N-acetyl-L-cysteine and dithiothreitol, a mixture of dithiothreitol and tris(2-carbonylethyl)phosphine hydrochloride, a mixture of N-acetyl-L-cysteine and tris(2-carbonylethyl)phosphine hydrochloride; and when the mucus dissociating agent is a mixture, a molar ratio of the respective components is from 5:1 to 1:1.

Preferably, the preservative in the liquid-based cell preservation solution is one selected from phenoxyethanol, sodium benzoate, and phenol. The preservative functions to prevent bacterial growth and improve cell preservation time.

The liquid-based cell preservation solution provided above is prepared by the following steps:
S1, taking preparation of 1000 mL of the preservation solution as an example, adding a buffer component, an ionic strength modifying agent, an anticoagulant, a mucus dissociating agent, a preservative, and the like component substance to a volumetric flask to obtain a mixed solution;
S2, first adding 500 mL of purified water into the volumetric flask, and stirring to dissolve the component substances in the mixed solution; and subsequently adding an alcohol, and continuing to stir and mix well to prepare a precursor liquid;
S3, adjusting a pH of the precursor liquid to 6.50 to 7.00, supplementing the purified water to the scale of 1000 mL, and stirring and mixing well to prepare the liquid-based cell preservation solution; wherein the liquid-based cell preservation solution includes, by mass percentage: 15 to 20% of an alcohol, 0.4 to 0.7% of a buffer component, 0.2 to 0.5% of an ionic strength modifying agent, 0.05 to 2% of an anticoagulant, 0.05 to 0.2% of a mucus dissociating agent, 0.5 to 0.9% of a preservative, and purified water as the balance.

In step S3, the pH of the precursor liquid is adjusted by adding hydrochloric acid or sodium hydroxide.

The preparation of a liquid-based cell preservative solution is described in further detail hereinafter with reference to specific examples.

### Example 1

Taking preparation of 1000 mL of the preservation solution as an example, 6 g of sodium dihydrogen phosphate, 1.2 g of magnesium acetate, 2 g of sodium chloride, 1 g of disodium ethylenediamine tetraacetic acid (EDTA), 1.5 g of N-acetyl-L-cysteine, and 6 g of phenoxyethanol were added into a volumetric flask.

500 mL of the purified water was added into the volumetric flask, and stirred to fully dissolve sodium dihydrogen phosphate, magnesium acetate, sodium chloride, disodium EDTA, N-acetyl-L-cysteine, and phenoxyethanol; and then another 180 g of methanol was added, and stirring was continued for sufficient mixing. As such, a precursor liquid was prepared.

The pH of the precursor liquid was adjusted to 6.50 to 7.00 with hydrochloric acid or sodium hydroxide, and finally purified water was supplemented to the scale of 1000 mL, and the solution was stirred to be uniform. As such, the cell preservative solution was prepared.

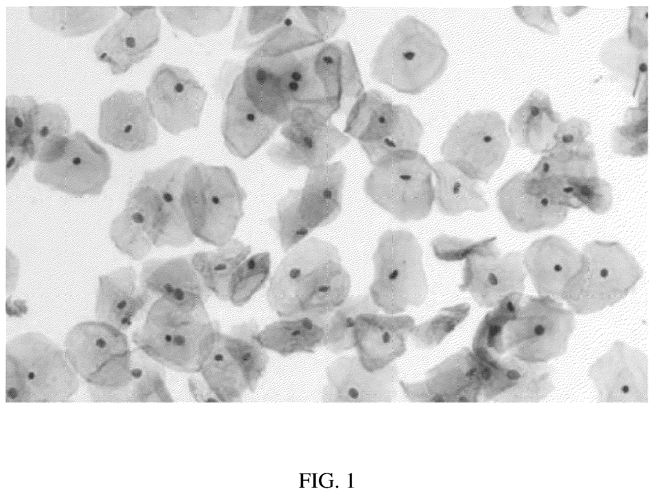

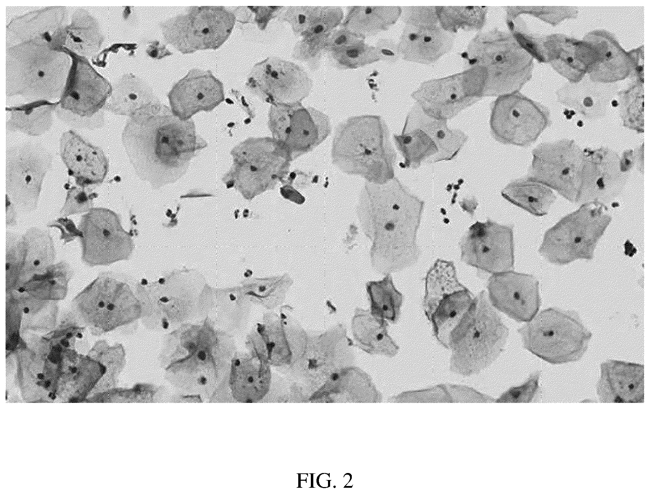

As illustrated in FIG. 1 and FIG. 2, FIG. 1 is a view showing morphology of cells before preservation; and FIG. 2 is a view showing morphology of cells stored for 1 year using the preservation solution prepared in Example 1. As seen from FIG. 1 and FIG. 2, after 1 year, the cells were in a dispersed state, the cell morphology was complete, the smear background was clear and transparent, and the cell monolayer was evenly distributed. This is conducive to diagnosis and pathological tracking and observation.

The liquid-based cell preservation solution in this example is mainly used for preserving cervical epithelial cells. The exfoliated epithelial cells were preserved in cell preservation solution at normal temperature, and the morphological structure changes of cells were observed. The results show that the exfoliated epithelial cells have high preservation rate, uniform cell distribution, complete cell morphology, clear boundary between cytoplasm and nucleus, no mucous layer, and very good transparency of cytoplasm and nucleus. Epithelial cells may be stored at room temperature for 1 to 2 years in this liquid-based cell preservation solution.

### Example 2

Taking preparation of 1000 mL of the preservation solution as an example, 5 g of sodium phosphate, 2 g of calcium acetate, 1.5 g of sodium chloride, 1.2 g of EDTA, 1 g of N-acetyl-L-cysteine, and 7 g of phenol were added into a volumetric flask.

500 mL of the purified water was added into the volumetric flask, and stirred to fully dissolve sodium phosphate, calcium acetate, sodium chloride, EDTA, N-acetyl-L-cysteine, and phenol; and then another 170 g of methanol was added, and stirring was continued for sufficient mixing. As such, a precursor liquid was prepared.

The pH of the precursor liquid was adjusted to 6.50 to 7.00 with hydrochloric acid or sodium hydroxide, and finally purified water was supplemented to the scale of 1000 mL, and the solution was stirred to be uniform. As such, the cell preservative solution was prepared.

### Example 3

Taking preparation of 1000 mL of the preservation solution as an example, 6 g of potassium dihydrogen phosphate, 1.5 g of sodium acetate, 3 g of sodium chloride, 1.2 g of dipotassium EDTA, 1 g of tris(2-carboxyethyl)phosphine hydrochloride, and 7 g of phenoxyethanol were added into a volumetric flask.

500 mL of the purified water was added into the volumetric flask, and stirred to fully dissolve potassium dihydrogen phosphate, sodium acetate, sodium chloride, disodium EDTA, N-acetyl-L-cysteine, and phenoxyethanol; then another 180 g of methanol was added, and stirring was continued for sufficient mixing. As such, a precursor liquid was prepared.

The pH of the precursor liquid was adjusted to 6.50 to 7.00 with hydrochloric acid or sodium hydroxide, and finally purified water was supplemented to the scale of 1000 mL, and the solution was stirred to be uniform. As such, the cell preservative solution was prepared.

### Example 4

Taking preparation of 1000 mL of the preservation solution as an example, 5 g of potassium phosphate, 2 g of sodium acetate, 1.6 g of a mixture of EDTA and disodium EDTA (wherein a molar ratio of EDTA to disodium EDTA is 1:1, namely, 0.7 g of EDTA and 0.9 g of disodium EDTA), 0.9 g of dithiothreitol, and 6 g of sodium benzoate were added into a volumetric flask.

500 mL of the purified water was added into the volumetric flask, and stirred to fully dissolve potassium phosphate, sodium acetate, EDTA, disodium EDTA, dithiothreitol, and sodium benzoate; and then another 180 g of a mixture of ethanol and isopropanol was added (wherein a mass ratio of ethanol to isopropanol is 2:1, namely, 120 g of ethanol and 60 g of isopropanol), and stirring was continued for well mixing. As such, a precursor liquid was prepared.

The pH of the precursor liquid was adjusted to 6.50 to 7.00 with hydrochloric acid or sodium hydroxide, and finally purified water was supplemented to the scale of 1000 mL, and the solution was stirred to be uniform. As such, the cell preservative solution was prepared.

### Example 5

Taking preparation of 1000 mL of the preservation solution as an example, 6 g of potassium dihydrogen phosphate, 4 g of sodium chloride, 2.15 g of a mixture of disodium EDTA and dipotassium EDTA (wherein a molar ratio of disodium EDTA to dipotassium EDTA is 2:1, namely, 1.39 g of disodium EDTA and 0.76 g of dipotassium EDTA), 1.27 g of a mixture of N-acetyl-L-cysteine and dithiothreitol (wherein a molar ratio of N-acetyl-L-cysteine to dithiothreitol is 1:1, namely, 0.65 g of N-acetyl-L-cysteine and 0.62 g of dithiothreitoland), and 6 g of phenoxyethanol were added into a volumetric flask.

500 mL of the purified water was added into the volumetric flask, and stirred to fully dissolve potassium dihydrogen phosphate, sodium chloride, disodium EDTA, dipotassium EDTA, N-acetyl-L-cysteine, dithiothreitol, and phenoxyethanol; and then another 160 g of a mixture of methanol and isopropanol was added (wherein a mass ratio of methanol to isopropanol is 3:1, namely, 120 g of methanol and 40 g of isopropanol), and stirring was continued for well mixing. As such, a precursor liquid was prepared.

The pH of the precursor liquid was adjusted to 6.50 to 7.00 with hydrochloric acid or sodium hydroxide, and finally purified water was supplemented to the scale of 1000 mL, and the solution was stirred to be uniform. As such, the cell preservative solution was prepared.

### Example 6

Taking preparation of 1000 mL of the preservation solution as an example, 7 g of sodium dihydrogen phosphate, 2.5 g of potassium chloride, 1.92 g of a mixture of EDTA and dipotassium EDTA (wherein a molar ratio of EDTA (292) to dipotassium EDTA is 3:1, namely, 1.31 g of EDTA and 0.61 g of dipotassium EDTA), 1.5 g of a mixture of dithiothreitol and tris(2-carboxyethyl)phosphine hydrochloride (wherein a molar ratio of dithiothreitol to tris(2-carboxyethyl)phosphine hydrochloride is 3:1, namely, 0.93 g of dithiothreitoland and 0.57 g of tris(2-carboxyethyl)phosphine hydrochloride), and 6.5 g of sodium benzoate were added into a volumetric flask.

500 mL of the purified water was added into the volumetric flask, and stirred to fully dissolve sodium dihydrogen phosphate, potassium chloride, EDTA, dipotassium EDTA, dithiothreitol, tris(2-carboxyethyl)phosphine hydrochloride, and sodium benzoate; and then another 175 g of a mixture of methanol and ethanol was added (wherein a mass ratio of methanol to ethanol is 4:1, namely, 140 g of methanol and 35 g of ethanol), and stirring was continued for well mixing. As such, a precursor liquid was prepared.

The pH of the precursor liquid was adjusted to 6.50 to 7.00 with hydrochloric acid or sodium hydroxide, and finally purified water was supplemented to the scale of 1000 mL, and the solution was stirred to be uniform. As such, the cell preservative solution was prepared.

### Example 7

Taking preparation of 1000 mL of the preservation solution as an example, 4.5 g of sodium phosphate, 2.4 g of magnesium acetate, 1.8 g of dipotassium EDTA, 1.88 g of a mixture of N-acetyl-L-cysteine and tris(2-carboxyethyl)phosphine hydrochloride (wherein a molar ratio of N-acetyl-L-cysteine to tris(2-carboxyethyl)phosphine hydrochloride is 4:1, namely, 1.31 g of N-acetyl-L-cysteine and 0.57 g of tris(2-carboxyethyl)phosphine hydrochloride), and 6 g of phenoxyethanol were added into a volumetric flask.

500 mL of the purified water was added into the volumetric flask, and stirred to fully dissolve sodium phosphate, magnesium acetate, dipotassium EDTA, N-acetyl-L-cysteine, tris(2-carboxyethyl)phosphine hydrochloride, and phenoxyethanol; then another 170 g of methanol was added, and stirring was continued for sufficient mixing. As such, a precursor liquid was prepared.

The pH of the precursor liquid was adjusted to 6.50 to 7.00 with hydrochloric acid or sodium hydroxide, and finally purified water was supplemented to the scale of 1000 mL, and the solution was stirred to be uniform. As such, the cell preservative solution was prepared.

### Example 8

Taking preparation of 1000 mL of the preservation solution as an example, 6.5 g of potassium phosphate, 1.2 g of magnesium acetate, 3.5 g of sodium chloride, 1.6 g of EDTA, 1.3 g of N-acetyl-L-cysteine, and 7 g of phenol were added into a volumetric flask.

500 mL of the purified water was added into the volumetric flask, and stirred to fully dissolve potassium phosphate, magnesium acetate, sodium chloride, dipotassium EDTA, N-acetyl-L-cysteine, and phenol; then another 180 g of ethanol was added, and stirring was continued for sufficient mixing. As such, a precursor liquid was prepared.

The pH of the precursor liquid was adjusted to 6.50 to 7.00 with hydrochloric acid or sodium hydroxide, and finally purified water was supplemented to the scale of 1000 mL, and the solution was stirred to be uniform. As such, the cell preservative solution was prepared.

### Example 9

Taking preparation of 1000 mL of the preservation solution as an example, 6 g of sodium dihydrogen phosphate, 1.8 g of sodium acetate, 2 g of potassium chloride, 1 g of disodium EDTA, 0.8 g of tris(2-carboxyethyl)phosphine hydrochloride, and 6.5 g of phenol were added into a volumetric flask.

500 mL of the purified water was added into the volumetric flask, and stirred to fully dissolve sodium dihydrogen phosphate, sodium acetate, sodium chloride, dipotassium EDTA, tris(2-carboxyethyl)phosphine hydrochloride, and phenol; then another 180 g of methanol was added, and stirring was continued for sufficient mixing. As such, a precursor liquid was prepared.

The pH of the precursor liquid was adjusted to 6.50 to 7.00 with hydrochloric acid or sodium hydroxide, and finally purified water was supplemented to the scale of 1000 mL, and the solution was stirred to be uniform. As such, the cell preservative solution was prepared.

### Example 10

Taking preparation of 1000 mL of the preservation solution as an example, 5 g of potassium dihydrogen phosphate, 1.2 g of calcium acetate, 0.9 g of sodium chloride, 2 g of disodium EDTA, 1.6 g of dithiothreitol, and 5 g of phenoxyethanol were added into a volumetric flask.

500 mL of the purified water was added into the volumetric flask, and stirred to fully dissolve potassium dihydrogen phosphate, calcium acetate, sodium chloride, disodium EDTA, dithiothreitol, and phenoxyethanol; then another 160 g of ethanol was added, and stirring was continued for sufficient mixing. As such, a precursor liquid was prepared.

The pH of the precursor liquid was adjusted to 6.50 to 7.00 with hydrochloric acid or sodium hydroxide, and finally purified water was supplemented to the scale of 1000 mL, and the solution was stirred to be uniform. As such, the cell preservative solution was prepared.

It should be understood that described above are merely exemplary embodiments of the present disclosure, which are not intended to limit the projection scope of the present disclosure. The projection scope of the present disclosure shall be subject to the appended claims.

## Claims

1. A liquid-based cell preservation solution comprising, by mass percentage: 15 to 20% of an alcohol, 0.4 to 0.7% of a buffer component, 0.2 to 0.5% of an ionic strength modifying agent, 0.05 to 2% of an anticoagulant, 0.05 to 0.2% of a mucus dissociating agent, 0.5 to 0.9% of a preservative, and purified water as the balance.

2. The liquid-based cell preservation solution according to claim 1, wherein the alcohol is one or any two selected from methanol, ethanol, and isopropanol.

3. The liquid-based cell preservative solution of claim 1, wherein the alcohol is methanol.

4. The liquid-based cell preservation solution according to claim 1, wherein the buffer component is sodium dihydrogen phosphate, potassium dihydrogen phosphate, sodium phosphate, or potassium phosphate.

5. The liquid-based cell preservation solution according to claim 1, wherein the ionic strength modifying agent is one or any two selected from sodium acetate, magnesium acetate, calcium acetate, sodium chloride, and potassium chloride.

6. The liquid-based cell preservation solution according to claim 1, wherein the anticoagulant is one or any two selected from ethylenediamine tetraacetic acid, disodium ethylenediamine tetraacetic acid, and dipotassium ethylenediamine tetraacetic acid.

7. The liquid-based cell preservation solution according to claim 1, wherein the mucus dissociating agent is one or any two selected from N-acetyl-L-cysteine, dithiothreitol, and tris(2-carboxyethyl)phosphine hydrochloride.

8. The liquid-based cell preservative of claim 1, wherein the preservative is one of phenoxyethanol, sodium benzoate, and phenol.

9. The liquid-based cell preservation solution according to claim 2, wherein the alcohol is a mixed alcohol of methanol and ethanol, wherein a mass ratio of methanol to ethanol is from 10:1 to 1:1.

10. The liquid-based cell preservation solution according to claim 2, wherein the alcohol is a mixed alcohol of ethanol and isopropanol, wherein a mass ratio of ethanol to isopropanol is from 5:1 to 1:1.

11. The liquid-based cell preservation solution according to claim 2, wherein the alcohol is a mixed alcohol of methanol and isopropanol, wherein a mass ratio of methanol to isopropanol is from 10:1 to 2:1.

12. The liquid-based cell preservation solution according to claim 5, wherein the ionic strength modifying agent is one selected from a mixture of sodium acetate and magnesium acetate, a mixture of magnesium acetate and calcium acetate, a mixture of calcium acetate and sodium chloride, a mixture of sodium chloride and potassium chloride, a mixture of sodium acetate and calcium acetate, a mixture of sodium acetate and sodium chloride, a mixture of sodium acetate and potassium chloride, a mixture of magnesium acetate and sodium chloride, a mixture of magnesium acetate and potassium chloride, and a mixture of calcium acetate and potassium chloride, wherein a molar ratio of the respective components of the mixture is from 5:1 to 1:5.

13. The liquid-based cell preservation solution according to claim 6, wherein the anticoagulant is one selected from a mixture of ethylenediamine tetraacetic acid and disodium ethylenediamine tetraacetic acid, a mixture of disodium ethylenediamine tetraacetic acid and dipotassium ethylenediamine tetraacetic acid, and a mixture of ethylenediamine tetraacetic acid and dipotassium ethylenediamine tetraacetic acid, wherein a molar ratio of the respective components of the mixture is from 3:1 to 1:1.

14. The liquid-based cell preservation solution according to claim 7, wherein the mucus dissociating agent is one selected from a mixture of N-acetyl-L-cysteine and dithiothreitol, a mixture of dithiothreitol and tris(2-carbonylethyl) phosphine hydrochloride, and a mixture of N-acetyl-L-cysteine and tris(2-carbonylethyl)phosphine hydrochloride, wherein a molar ratio of each component of the mixture is from 5:1 to 1:1.

15. A method for preparing the liquid-based cell preservative solution of any one of claims 1 to 14, comprising:
adding a buffer component, an ionic strength modifying agent, an anticoagulant, a mucus dissociating agent, and a preservative to a volumetric flask to obtain a mixed solution;
adding purified water into the volumetric flask, and stirring to dissolve the mixed solution; then adding an alcohol, continuing to stir and mix well to prepare a precursor liquid; and
adjusting a pH of the precursor liquid to 6.50 to 7.00, and supplementing purified water to prepare the liquid-based cell preservation solution.

16. The method according to claim 15, wherein the pH of the precursor liquid is adjusted by adding hydrochloric acid or sodium hydroxide.
